# EUROPEAN PATENT SPECIFICATION

(11) **EP 4 438 143 B1**
(45) Date of publication and mention of the grant of the patent: **31.12.2025**
(21) Application number: 24163994.7
(22) Date of filing: 15.03.2024
(51) Int. Cl.: A63F 13/54, H04N 21/439, H04N 21/442

(54) **AUDIO ADJUSTMENT IN A VIDEO GAMING SYSTEM**
AUDIOEINSTELLUNG IN EINEM VIDEOSPIELSYSTEM
AJUSTEMENT AUDIO DANS UN SYSTÈME DE JEU VIDÉO

(30) Priority: 17.03.2023 GB 202303932
(43) Date of publication of application: 02.10.2024
(73) Proprietor: Sony Interactive Entertainment Europe, London W1F 7LP (GB)
(72) Inventor: THRESH, Lewis, London, W1F 7LP (GB); BARN, Lewis, London, W1F 7LP (GB); EDER, Michael, London, W1F 7LP (GB); SCHEMBRI, Danjeli, London, W1F 7LP (GB); PANESAR, Pritpal Singh, London, W1F 7LP (GB); COSTANTINI, Giacomo, London, W1F 7LP (GB)
(74) Representative: Gill Jennings & Every LLP

(56) References cited:
- US-A1- 2010 178 870
- US-A1- 2015 243 286
- US-A1- 2017 105 083
- US-A1- 2020 306 632
- US-A1- 2020 382 894
- PIERRE BONNARD ET AL: "An implementation of graceful-degradation concept in a 3D audio compositor", no. M1998; m1998, 1 April 1997 (1997-04-01), XP030031286, Retrieved from the Internet <URL:http://phenix.int-evry.fr/mpeg/doc_end_user/documents/39_Bristol/contrib/m1998.zip M1998.doc> [retrieved on 20100827]

## Description

### FIELD OF THE INVENTION

The present invention relates to the field of video gaming systems and methods, and provides a system and method of dynamically adjusting audio output during gameplay on a video gaming system.

### BACKGROUND

Although the capabilities of video gaming systems continue to rapidly progress, with increasingly high specification hardware, video game developers continue to push the limits of these systems with increasingly vast and immersive video game environments, comprising richly detailed graphic and audio assets and requiring increasingly complex physics calculations. During gameplay, this visual and audio output is provided by processing stored data encoding these assets to output a continuous audio and visual output stream in step with the unfolding gameplay events. The processing of this audio and graphic data takes place in one or more processing units of the video game system, normally a central processing unit, CPU.

The processing capacity of the CPU must normally be shared between the physics engine and the visual and audio output streams and therefore the processing requirements for the gameplay will vary depending on the events taking place during the gameplay. During particularly intense passages of gameplay, for example large action sequences, with a large number of characters interacting in the gameplay environment, the processing requirement increases in order to process the large number of audio and graphics components and output these in the audio and visual output stream. In certain situations, the processing required may exceed the capacity of the processing unit, leading to performance issues, such as failure to process and output certain audio or visual components, and a detrimental impact on the user experience.

The increasingly rich, dynamic audio employed in video games, including sound effects, dialogue and music, places a greater strain on the processor. Typically, to try to ensure there is sufficient processing capacity, the CPU capacity is divided between the audio and visual requirements, for examples the division of the CPU capacity may be based on a fixed split, with the audio processing provided with 30% budget of the total CPU capacity and the rest utilised by the physics and graphics engine. When the audio processing capacity is reached, audio components may be dropped from the output stream, resulting in negative impact on the user experience.

Accordingly there exists a need for a solution to maximise the use of the CPU to provide the best experience to the user, particularly during intense sections of gameplay.

US 2017/105083 A1 discloses obtaining filter coefficients for a binaural synthesis filter, and applying a compensation filter to reduce artefacts resulting from the binaural synthesis filter. Pierre Bonnard et al, "An implementation of graceful-degradation concept in a 3D audio compositor" (MPEG Meeting, Motion Picture Expert Group, XP030031286), discloses a complexity-scalable 3D-audio compositor. US 2010/178870 A1 discloses a method for adaptive audio quality control in order to improve a high quality audio transmission function of a Bluetooth Audio Visual profile. US 2015/243286 A1 discloses selecting a device for use in outputting an audio effect, and upon determining that transmitting the audio effect as uncompressed data to the selected device would violate a performance criteria, determining, for each portion of the audio effect, a respective priority and modifying the audio effect. US 2020/382894 A1 discloses a technique for virtualizing an audio source including rendering that audio source based on the audio source location relative to a listener. US 2020/306632 A1 discloses a prediction model generated using the historical and/or current user interaction data obtained by monitoring the users playing the video game.

### SUMMARY OF INVENTION

In a first aspect of the invention there is provided a method for adjusting the audio output of a video gaming system during gameplay, the method comprising: measuring the usage of a processing unit of the video gaming system during gameplay, wherein the video gaming system is configured to output an audio stream comprising a plurality of audio components, the processing unit configured to process an audio data file to output each audio component; adjusting an output quality of one or more audio components of the audio stream in response to the measured usage of the processing unit.

By adjusting the output quality of the audio components of the audio output stream in response to the measured usage of the processing unit, the audio output quality may be maximised within the limit of the processing unit's capacity at a particular in point in time. Importantly, rather than simply dropping audio components when there is insufficiency processing capacity, as in prior art methods, one or more audio components may be reduced in output quality but still retained in the audio output stream. This provides the best overall experience to the user while maximising the processing resources available.

The method comprises selecting an audio component to be adjusted based on a determined priority of the audio component relative to other audio components in the audio stream. In particular, an audio component may be selected for adjustment based on a determined importance to the overall audio output quality, for example its impact on the overall user experience of the audio. In this way, audio components may selected to be processed at a lower output quality according to how important they are in the user experience. This allows for the overall user experience of the audio to be preserved as much as possible, while reducing the processing demands on the processing unit.

The method additionally comprises receiving data from an eye-tracking module indicative of the location of the gaze of a user, where the priority of the audio component is determined based, at least in part, on the correspondence between the location of user's gaze and the virtual source of the audio component within the game environment. The user's gaze indicates the portions of the screen that the user is focussed on at that moment in time, which may be indicative as to the parts of the audio most relevant to the user. Therefore, by assigning priority in this way, audio components associated with parts of the game that the user is focussed on may be output at a higher quality than those associated with parts of the game further from the user's point of focus.

The method comprises calculating a probability of the usage of the processing unit exceeding a predetermined threshold; reducing the output quality of one or more audio components of the audio stream pre-emptively to avoid the usage of the processing unit exceeding the predetermined threshold; wherein the probability is calculated based on input including one or more of: the current stage of gameplay, a sequence of gameplay events in a preceding time period, user input received with a user input device within a preceding time period. In this way, audio components may be selected for output at reduced quality when it is predicted that the processor is unlikely to have sufficient capacity, thereby making adjustments prior to any detrimental effects on the audio output, such as audio components being dropped.

The phrase "usage of the processing unit" may refer to the load or utilisation of the processing unit. For example it may be measured as a percentage of maximum capacity of the processing unit, or as a percentage of a proportion of the capacity reserved for audio processing. "Audio components" are parts of the output audio. These may refer to individual audio assets, for example sound effects, dialogue and music. These assets may be stored as audio data files and processed to output the corresponding audio component.

The "output quality" may be defined as the level of detail of the audio output, or the fidelity of the audio output. Output quality may correspond to the amount of data/information in the audio and so correspond to a larger audio date file size.

Preferably the audio quality is decreased when the measured usage indicates that the processor may not be able to process the audio components at the default output quality, for example when the measured usage indicates that the processing capacity may be met or exceeded, for example when the measured usage exceeds a predetermined threshold. In other examples the audio quality may be increased when the measured usage indicates available capacity, for example when the measured usage is below a predetermined threshold.

In some examples adjusting the output quality of an audio component comprises varying one or both of the bit depth and the sample rate of the audio component. Adjusting the output quality may comprise varying one or more of a bit depth of a corresponding audio data file encoding the audio component, a sample rate of a corresponding audio data file encoding the audio component; a frequency range of a corresponding audio data file encoding the audio component. These parameters determine the amount of audio information encoded in an audio file and so provide a mechanism to vary the output quality of the audio components.

In some example the method may comprise selecting a frequency window and processing audio data of the audio component only within the frequency window. for example, where the audio component comprises dialogue, the method may comprise selecting a frequency window encompassing the frequencies of the dialogue and only processing the selected frequency window. The method may comprise storing a first audio data file comprising a full version of an audio component and a second audio data file comprising a reduced version of the audio data component, where the reduced version has one or more of a restricted frequency range relative to the full version, a lower sample rate than the full version or a lower bit depth relative to the full version; and adjusting the output audio quality of an audio component by selecting the full version or the reduced version for processing to be output in the audio output stream.

Preferably the method comprises determining when the measured usage of the processing unit exceeds a threshold of the total capacity of the processing unit; and reducing the output quality of one or more audio components of the audio stream. In this way, when there is or may be insufficient capacity of the processing unit to process the audio components required, the quality of the audio components may be reduced, for example by reducing the sample rate and/or bit depth, to reduce the load on the processor, while still outputting the audio components in the output stream. This minimises any impact on the user experience. The threshold could be 80, 85, 90, 95, or 99% of the capacity of the processor reserved for processing audio data.

Preferably the video gaming system comprises a memory storing a plurality of audio data files for each audio component, each audio data file encoding the same audio component at a different file size, where adjusting the output quality of an audio component comprises: selecting an audio data file from the plurality of audio data files to vary the amount of audio data required to be processed to output the corresponding audio component. By storing each audio component in a plurality of audio data files, each encoding the audio component at a different quality, i.e. a different level of detail, when the audio component is required, the audio data file may be selected based on the measured usage of the processing unit at that time. Where there is sufficiency capacity a large audio file size may be used; where the usage is over a predetermined threshold a smaller audio file size may be used, reducing the load on the processing unit.

In some examples of the invention, the video gaming system comprises a memory storing a high-quality audio data file for one or more audio components, the high-quality audio data file encoding sufficient audio data to output the audio component at a first output quality, where adjusting the output quality of the one or more audio component comprises: processing the high-quality audio data file to output the corresponding audio component at a second output quality that is lower than the first output quality. In this way, rather than storing multiple audio data files encoding the same audio component at different file sizes (and corresponding varied processing requirements), a single audio data file (or set of audio data files) is stored encoding the audio component for output at the highest quality (which in some cases may the "default quality"). When adjusting the output quality to a lower output quality, the audio data file is processed in such a way to output it at a lower output quality, thus requiring reduced processing capacity than if the audio data file was processed in full. In this way, less memory is required than a situation where audio components are saved at a plurality of file sizes and corresponding output qualities.

The term "high-quality audio data file" is used to refer to an audio data file (or set of audio data files) that encodes an audio component at the default or maximum output quality. In particular, the high-quality audio data file encodes more audio information than is output when outputting at the second, lower, output quality. It therefore allows for selection between outputting at full quality or reduced quality.

In one example, processing the high-quality audio data file comprises: converting the high-quality audio data file to a reduced-quality audio data file and processing the reduced-quality audio data file, where reduced-quality audio data file has a smaller file size that the high-quality audio data file. More specifically, at run-time, i.e. during gameplay, a high-quality audio data file is converted to a reduced quality audio data file for processing and output in the audio output stream. The process may be configured such that the conversion and processing for output together have a lower processing requirement than processing the high-quality audio data file in full. For example, the quality may be reduced sufficiently during the conversion to achieve this.

Preferably the reduced-quality audio data file has one or more of: a reduced bit depth, a reduced sample rate or a reduced frequency range relative to the high-quality audio data. In particular the process of converting the high-quality audio data file comprises converting to one or more of: a reduced bit depth, a reduced sample rate or a reduced frequency range.

In some examples, processing the high-quality audio data file comprises: processing only part of the audio data of the high-quality audio data file to output the corresponding audio component at the second output quality. The method may comprise disregarding parts of the audio data when processing for output. For example, the method may comprise processing audio data only within a predetermined frequency range or at a reduced sample rate or bit depth. In this way, rather than first converting the high-quality audio data file to a reduced-quality audio data file and then processing, the high-quality audio data file is processed in a way to directly output the audio component at a lower output quality. This may comprise processing at a lower sample rate, disregarding a portion of the samples.

Preferably the method comprises selecting an audio component to be adjusted based on the measured usage of the processing unit. For example, where the measured usage is particularly high, for example over a first higher threshold, a large audio component may be selected to output at a lower quality, thereby providing greater relief on the processing unit. Where the usage is only over a second lower threshold, a smaller audio component (i.e. based on smaller file size) may be selected to provide the smaller reduction in processing capacity required.

Preferably the method comprises selecting the number of audio components to be adjusted based on the measured usage of the processing unit. In this way, a number of audio components can be selected based on the extend of the load on the processing unit, to provide a corresponding reduction in processing requirement.

Preferably, the method may comprise determining when the measured usage of the processing unit exceeds a threshold of the total capacity of the processing unit; determining a reduction in the usage of the processing unit required to return the usage below the threshold of the total capacity; selecting one or more audio components to be adjusted based on the processing requirement of the corresponding audio data file in order to return the usage of the processing unit below the threshold of the total capacity.

More generally, the method may comprise selecting one or more audio components based on their processing requirements in response to the measured usage of the processing unit, for example to provide a required total reduction in the processing requirement. Using these methods, the adjustment may be tailored in response to the measured stress on the processing unit, so as to preserve the audio output as much as possible within the limits of the available processing resources.

Preferably the priority of the selected audio component is pre-assigned. For example, each audio component may have a priority value or score according to an assessment of the importance of the audio component to the overall audio output or user experience. Preferably the priority of the selected audio component determined based, at least in part, on a predetermined priority ranking according to the type of audio component. A type of audio component may comprise music, dialogue, player character sound effects, non-player character sound effects, scenery sound effects.

Preferably the priority of the selected audio component is determined based on the distance of a virtual source of the audio component from the player character within the game environment, where audio components having a virtual source closer to player character are determined as having a higher priority. This may apply only to diegetic sounds, as these sounds have a virtual source in the game environment. The virtual source may be the game object or character creating the sound. In this way, audio components associated with sounds generated further from the player character may be preferentially selected for downward adjustment of audio output quality. These sounds are likely to be less impactful to the user understanding and experience of the game.

Preferably the priority of the audio component is determined based, at least in part, on the number of similar corresponding audio components to be output within a threshold time period around the selected audio component, wherein an audio component is determined as having a lower priority where there are a greater number of similar audio components to be output within the threshold time period. When a large number of similar sounds are output together or in a similar time period, it is likely to be of lesser importance to render each to the maximum output quality, given they are unlikely to be fully appreciated to the user. By determining one or more of such sounds as lower priority, the method may select one or more audio components corresponding to the sounds to adjust to a lower output quality, thus reducing load on the processing unit while minimising the effect to the user enjoyment of the game.

Preferably the method comprises monitoring the location of the user's gaze based on the data received from an eye-tracking module and adjusting the quality of one or more audio components such that audio components corresponding to a virtual source nearer the location of the user's gaze are output at higher quality than audio components corresponding to a virtual source further from the location of the user's gaze.

Preferably the priority may be determined based on a plurality of the parameters defined above.

Preferably the method comprises monitoring the usage of a central processing unit, CPU, of the video gaming system during gameplay, where the CPU processes components of an audio stream, and possibly also a video stream, to be output during gameplay. The method may additionally comprise monitoring the usage of a graphical processing unit (GPU), where the GPU is configured to process one or more audio components of an output audio stream.

Preferably the method comprises receiving a user input with a user input device of the video gaming system, where the user input initiates a game play event associated with one or more audio components to be output in the audio stream; measuring the usage of the processing unit of the video gaming system when the user input is received; adjusting an output quality of one or more audio components associated with the user input in response to the measured usage of the processing unit. In this way the method may take place on receiving a user input initiating an event in order to determine whether there is sufficient processing capacity to process the audio components associated with the event and adjust the output quality of one or more of the components if required.

In a further aspect of the invention there is provided a computer program comprising instructions that, when executed by a processor, cause a computer to perform the steps of the methods defined above or in the appended claims.

In a further aspect of the invention there is provided a video gaming system comprising: an audio output configured to output an audio stream during gameplay, the audio stream comprising a plurality of audio components; a processing unit configured to process an audio data file to output each audio component of the audio stream; an audio adjustment module configured to: measure the usage of the processing unit during gameplay; and adjust an output quality of one or more audio components of the audio stream in response to the measured usage of the processing unit.

The audio adjustment module may be implemented as a method performed by a processing unit of the video gaming system. The audio adjustment module may be implemented as software run on the video gaming system. For example a memory of the video gaming system may comprise instructions that, when executed by a processing unit of the video gaming system, cause the video gaming system to carry out the steps of any method described above or herein.

The features described above in relation to the method of the invention may equally be implemented within the video gaming system according to the invention.

In a further aspect there is provided a computer program comprising instructions that, when executed by a processor, cause the computer to carry out the steps of any method described above or herein.

### BRIEF DESCRIPTION OF DRAWINGS

Figure 1A illustrates a method flow diagram of a method according to the present invention;
Figure 1B illustrates a method flow diagram of a method according to the present invention;
Figure 2A illustrates a video gaming system according to the present invention;
Figure 2B illustrates a video gaming system according to the present invention.

### DETAILED DESCRIPTION

Video game systems comprise one or more processing units responsible for processing the audio and visual data assets which are deployed during gameplay dependant on the gameplay events that arise. Although modern video games systems often have high specification hardware, to facilitate the output of high-definition visual and audio output, there are still times when the processing unit is put under stress, particularly when a large number of audio and visual assets must be deployed during particularly intense passages of gameplay. Typically, in prior art systems, when the processing unit reaches or approaches maximum capacity some of these audio components are simply dropped given that there is not sufficient processing capacity to deploy them. The principle of the present invention is that, rather than dropping audio components entirely when there is insufficient processing capacity, instead, the output quality of one or more audio components may be reduced, but still output in the audio output stream. This reduces the impact on the user experience, and also allows the adjustments to be tailored by selecting audio components to adjust to minimise the effects on the user experience, for example by selecting just the minimum audio components to reduce in quality to prevent the processor from reaching capacity - or by selecting only lower priority audio components to reduce in quality. The invention may be implemented in a number of different ways.

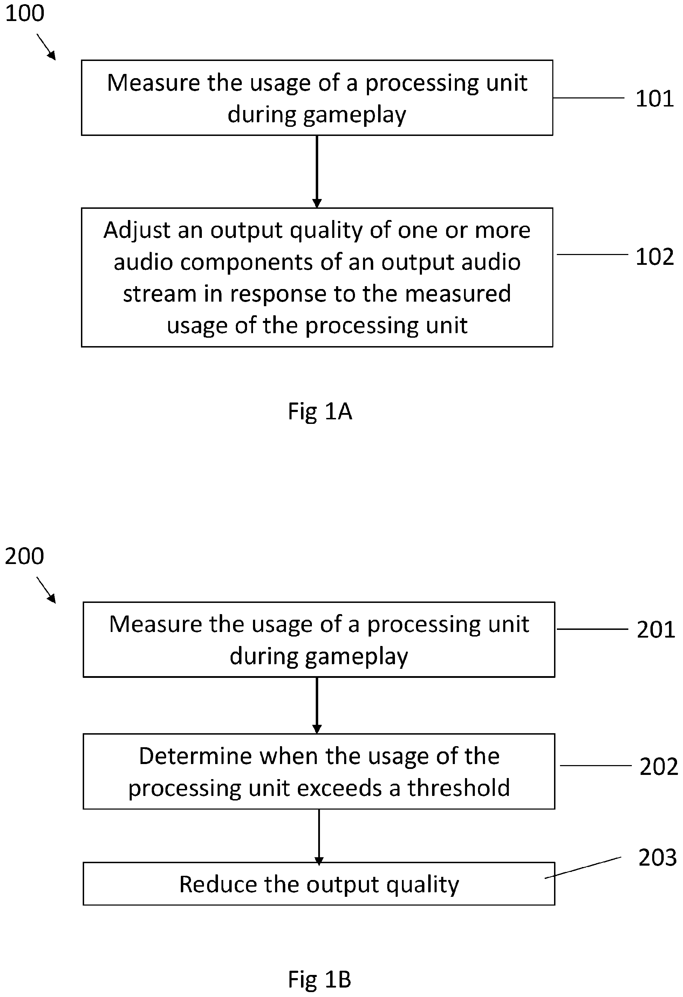

Figure 1A schematically illustrates a method 100 for adjusting the audio output of a video gaming system during gameplay according to the present invention. The method comprises a first step 101 of measuring the usage of a processing unit 10 of the video gaming system 1 during gameplay. The video gaming system is configured to output an audio stream comprising a plurality of audio components, such as music, dialogue and sound effects, where the processing unit is configured to process a corresponding audio data file to output each audio component. The method 100 includes a second step 102 of adjusting an output quality of one or more of the audio components of the audio stream in response to the measured usage of the unit. In this way, the output quality of the audio stream may be varied in line with the available processing capacity of the CPU.

Figure 1B illustrates a preferable example of the method 200 in which the quality is reduced in response to the CPU usage exceeding a threshold. In particular, the method comprises a first step 201 of measuring the usage of a processing unit during gameplay, a second step 202 of determining when the usage of the processing unit exceeds a threshold and a third step 203 of reducing the output quality of one or more audio components in response to the measured usage. In this way, when the processor approaches or reaches a limit, the system will start to output lower quality audio with a reduced processing requirement, avoiding audio components being dropped and maintain a full audio stream.

Although this is the preferable embodiment envisaged, the invention also encompasses enhancing the output quality when there is spare capacity of the processing unit. In particular, in a further example, the method may comprise determining when the usage of the processing unit decreases below a threshold, or alternatively where the capacity remaining on the processing unit exceeds a threshold, and enhancing the output quality of one or more audio components in response. For example, the default may be to output audio components at a first output quality then, when it is detected that the processing unit has sufficient capacity, one or more audio components may be selected to be adjusted to be output at a second, increased output quality.

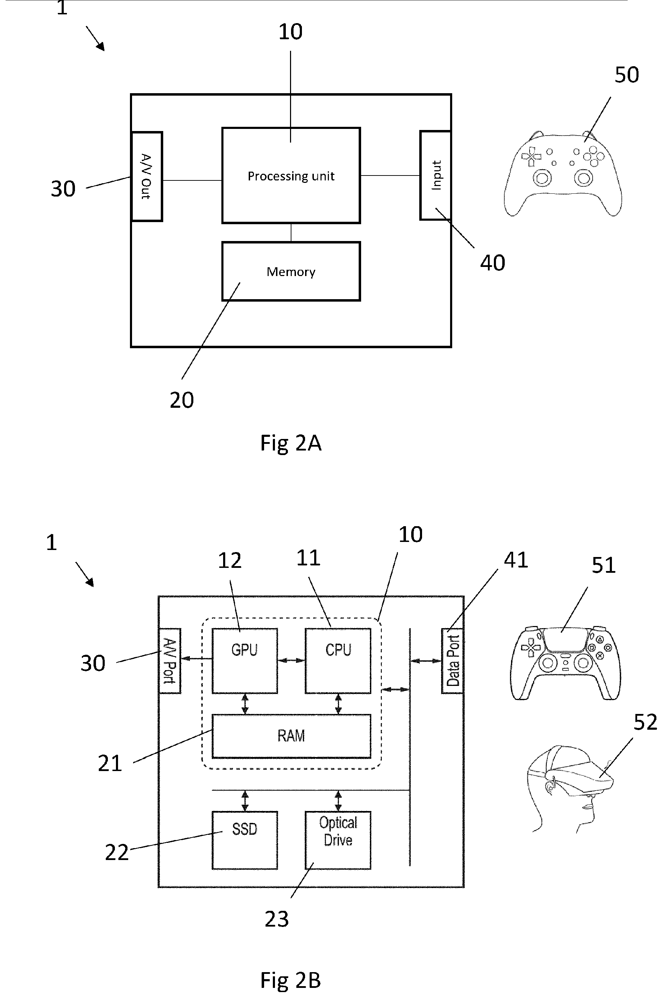

The various implementation features of the invention will be described in reference to the exemplary schematic diagrams of video gaming systems illustrated in Figures 2A and 2B. Figure 2A schematically illustrates a video gaming system 1 according to the present invention. The video games system 1 comprises a processing unit 10 configured to process audio data files to output each audio components of the audio stream with the audio output 30. In this example, the system one also comprises a local memory 20 which may be used to store audio data files for processing by the processing unit before being output as part of the output audio stream with the audio output 30.

The system further comprises an audio adjustment module configured to measure the usage of the processing unit during gameplay and adjust an output quality of one of audio components of the audio stream in response to the measured usage of the processing unit. The "audio adjustment module" is preferably implemented by one or more components of the video gaming system. For example the audio adjustment module (i.e. the functionality provided by the audio adjustment module) may be implemented by the processing unit 10. The video gaming system one may further comprise an input 40 for receiving user input during gameplay, for example the input 40 may be connected to a controller 50, as illustrated in Figure 2A. The input may comprise any number of input types, for example a disk drive, USB, Bluetooth, wireless or wired internet connection, allowing the video gaming system to receive data.

After loading a video game and initiating gameplay, the video gaming system 1 outputs an audio output stream and a visual output stream via the audio visual output 30, by processing audio and graphical data files, or "assets", with the processing unit 10. The audio visual output is connected to a display for displaying the visual output stream and speakers for outputting the audio output stream. The audio output stream comprises of plurality of audio components. These might include music, dialogue and sound effects, all of which may vary depending on the gameplay events occurring as the gameplay progresses based on the user inputs received at the input 40. The graphical and audio assets, i.e. graphic and audio data files, corresponding to these audio and visual components are stored in memory 20 locally or remotely, before being accessed and processed by the processor unit 10 to be deployed as part of the audio-visual output stream.

Given the audio and visual output stream will vary depending on the gameplay events occurring, the load on the processor unit 10 will also vary depending on the progression of gameplay. During intense sections of gameplay such as battle scenes, where there are a large number of characters present and interacting in the gameplay environment, the processing requirements will increase as an increasing number of audio assets are accessed and processed to be deployed for associated sound effects, dialogue and music. Therefore, in certain situations the load on the processing unit 10 is such that the capacity of the processing unit 10 restricts further processing, and audio components cannot be processed. In the present invention an audio adjustment module measures the usage of the processing unit during gameplay and in response can adjust the quality of the output of the audio components to allow for them to output at a reduced quality.

There are a number of important parameters which define the output quality of an audio component. Two important parameters are the bit depth and the sample rate of the corresponding audio data file which is processed to output the audio component. The sample rate is the number of times per second a sample of the audio is taken, and correspondingly the number of times that the audio is reconstructed by the hardware when playing the sound. For example, common sample rates for digital audio are 44.1kHz or 48kHz (i.e. 44,100 or 48,000 samples per second). The bit depth is the number of bits in each sample, i.e. how information rich each of those samples are. A higher sample rate and a higher bit depth (together defining the "bit rate") both increase the amount of information encoded in an audio data file and therefore provide a higher quality (i.e. higher fidelity) audio, but increase the processing required to convert the audio date file to an audio output signal.

In certain examples of the invention, the method comprises varying one or both of these parameters to adjust the output quality of the audio components and therefore the load on the processing unit. When the measured usage of the processing unit 10 is above a threshold one or more audio components may be output at a reduced sample rate and/or bit depth. This will decrease the amount of processing the processing unit 10 must do to output the corresponding audio component.

In one example, for each audio component a plurality of audio data files may be saved in the memory 20, where each of the audio data files encodes the audio component at a different file size and therefore has a different processing requirement in order to output the audio component. More specifically, each of these alternative audio data files corresponding to the single audio component may have a different bit depth and/or a different sample rate. Alternatively or in addition, the audio data files may have different frequency ranges with the largest files, requiring the most processing having a full frequency range, and other audio data files encoding the audio components at a reduced frequency range, requiring reduced processing. The latter example may be particularly beneficial for dialogue where the dialogue generally falls within a limited frequency range, and therefore could be output at a reduced frequency range without significantly affecting the information conveyed. By saving multiple audio data files at different file sizes for audio components, when a certain audio component must be output as part of the audio stream, the output quality can be caried by selecting an audio date file with a different sample rate, bit depth or frequency range. In this way, the output quality of the audio component and the requirements on the processing unit can be adjusted in response to the monitored load on the processing unit.

In some examples, simply a higher quality audio data file and a lower quality audio data file may be saved for each audio component. When the audio adjustment module (implemented by the processing unit 10 of the system 1) detects that the load on the processing unit has increased beyond a predetermined threshold, indicating a potential performance bottleneck, the lower quality audio data file may be selected for processing and outputting for one or more audio components of the audio stream. For example, in a gameplay scenario in which there are a large number of characters moving around in the game environment, and where the movement of each character is associated with a different footstep sound effect, the audio adjustment module may select a lower quality audio data file version of the footstep sound effect for one or more characters, for example characters further from the player character, in order to reduce the load on the processing unit.

Instead of saving an audio component at a plurality of different file sizes, audio components may be stored at a single file size encoding the audio component at the highest output quality. Then, when the audio component is selected for adjustment to a lower output quality it may be processed in a way to output the audio component at a lower output quality. This has some advantages over storing multiple audio data files for an audio component in that it frees up memory. This example of the invention may be implemented in a number of ways. Firstly, when an audio component is selected for adjustment at run time, i.e. during gameplay, the corresponding audio data file may be converted to a lower quality version for processing and output in the audio output stream. That is, a first higher/default quality audio file may be loaded from the memory and converted to a second reduced-quality audio data file. This may involve converting the high-quality audio data file to a lower sample rate, bit depth and/or reduced frequency range. The reduced-quality audio data file is then processed by the processing unit for output at the audio output. By converting the audio data file to an audio data file of reduced size (i.e. encoding the audio component in a less detailed form, such as at a lower sample rate and/or bit rate) less processing is required by the processing unit reducing the stress on the processing unit.

Although this possibility saves memory as it does not require storing multiple versions of the audio component, it does introduce some additional processing required for the conversion. Therefore the conversion should be such that the reduction in processing required to output the reduced-quality file is greater than this additional processing required for the conversion. Put another way, the parameters of the conversion are selected such that the reduction in processing for output more than offsets the processing requirement for the conversion.

The conversion may simply involve converting to a reduced sample rate, reducing the resolution of the audio data file. It may additionally or alternatively involve reducing the bit depth. There are some audio components where some part of the full frequency range in the high-quality file is more important than others. For example, a central part of the frequency range is likely to be more important than the very low and high frequencies nearer the limits of human hearing. Therefore the audio data file can be converted to a version having a reduced frequency range around a central region of the total frequency range. Some specific audio types, like dialogue, are generally within a narrower frequency range. These types of audio can be converted to restrict the frequency range to a section of the frequency range carrying the most information (i.e. the dialogue).

In a further example of the method, rather than converting the audio data file to a smaller file size during gameplay and then processing the reduced-quality file for output. The audio adjustment module may comprise an intelligent processing function in which the high-quality audio data file is processed and output at a lower quality in a single step, without a separate conversion to a reduced-quality audio date file. In particular the method may comprise processing parts of the audio data in the high-quality audio data file and disregarding other parts to process the high-quality audio data file and output it at a lower quality in a single step.

The process of measuring the usage of the processing unit may be implemented in a number of different ways. The fundamental principle is to measure the amount of processing performed by the processing unit relative to the total processing capacity available for the audio stream (this may be all, or a fixed or variable percentage, of the total processing capacity). Based on this measurement, it can be determined whether there are or are likely to be performance issues with processing the audio components required by the gameplay. In one example the audio adjustment module may be configured to measure the utilisation of the processing unit, i.e. a percentage of the total capacity of the processing unit currently being utilised. When it is detected that the percentage utilisation of the total capacity of the processing unit 10 exceeds a predetermined threshold, for example 80 or 90%, action may be taken to adjust the output quality of one of more audio components the audio stream, for example by choosing an audio data file encoding the required audio components at a reduced bit depth or a reduced sample rate or both.

Other examples in which the measurement of the usage of processing unit may be implemented are possible. For example, the audio adjustment module may determine when the load on the processing unit increases rapidly in a short space of time as indicative of the fact that there may be performance issues in outputting the audio at the default quality. That is, beyond simply measuring when the utilisation exceeds the threshold, the methods may encompass determining when a rate of increase of the utilisation of the processing unit exceeds the threshold or more broadly where the behaviour of the load on the processor displays a behaviour known to be indicative of a potential performance bottleneck. Extending this principle further, the audio adjustment module may predict when the processing unit capacity is likely to be insufficient for the required audio and visual output. For example, the method may comprise calculating a probability that the usage of the processing unit will exceed a threshold, and acting to adjust the quality of audio components where the probability is above a threshold.

The probability may be calculated using an algorithm taking as input one or more types of data. For example the probability may be calculated based on the current stage of gameplay within the video game, for example if the user is approaching a processing-heavy area of the game environment, or initiating a battle sequence. Further inputs include the sequence of gameplay events occurring in a preceding time period, for example if the user is initiating game events that are associated with high processing requirements, or if events are occurring indicating that indicate there is a high likelihood of future events occurring with large processing requirements, such as a large number of enemy characters have been generated or are entering the vicinity of the player character. Another input could be the user's gameplay history, such as how they approach certain gameplay situations. Another input could be the user inputs received at the controller, for example indicating the user is directing the character towards enemy characters or is selecting a particular weapon. The algorithm may be a machine learning model trained on one or more of these inputs to predict a likelihood of the usage of the processing unit exceeding a threshold. In this way the audio output quality can be adjusted before the threshold capacity is reached to ensure there is no impact on performance, for example in terms of the dropping of certain audio components where there is insufficient CPU capacity.

As described above the audio output stream comprises a plurality of audio components associated with different aspects and events of gameplay, for example character dialogue, sound effects associated with the environment, sound effects associated with non-player character actions, sounds associated with the player character actions, music and other sound components. After measuring the usage of the processing unit the method may encompass adjusting one or more of these audio components, of different audio component type, in response to the measured usage of the processing unit. In some examples all components of the audio stream may be adjusted in output quality. In other examples one or more audio components may be selected from the plurality of audio components to be output. By selecting only certain audio components to adjust, the effect on the overall audio quality may be minimised, while reducing the burden on the processing unit.

In one example audio components may be selected at random, for example until the usage of the processing unit returns below a threshold. In other examples, the specific audio components selected, and/or the number of audio components, may be selected based on the processing requirements of those audio components (e.g. the file size of the audio components) and the measured usage of the processing unit. For example, the greater the measured usage of the processing unit, and/or the closer that it approaches is the capacity of the processing unit, the larger the total processing requirement of the selection of audio components for adjustment. For example, where the measured usage only narrowly exceeds a threshold, smaller or fewer audio components may be selected to have their output quality reduced. Where the threshold is greatly exceeded the larger or greater number of audio components are selected to have their output quality reduced, for example by outputting at a lower sample rate or bit rate. In this way, the greater the stress on the processing unit, the greater the action taken to reduce the stress on the processing unit.

In certain preferable examples of the invention audio components are selected for adjustment based on an associated priority of the audio component. In particular certain audio components may be of higher priority to the user than other audio components. This priority may be based on how important they are to the user experience of the game. For example audio components associated with character dialogue which is crucial to the users understanding of the narrative of the game will be important to preserve in high quality. On the other hand, sound effects associated with background events such as sounds generated by the scenery may be of lesser priority and so these may be selected preferentially for a reduction in output quality if the system determines that the capacity of the processing unit is being stretched.

The method may comprise simply assigning a priority to each audio component present in the game such that the method can select audio components based on this assigned priority. For example, different audio component types may be assigned different priorities, where, for example, dialogue may be assigned the highest priority, followed by music, sound effects associated with the player character, sound effects associated with non-player characters and finally sound effects associated with the scenery. This priority hierarchy is purely an example, and the relative priorities may be implemented in any way as long as long as there is a plurality of different assigned priorities across the various audio components. During gameplay, when the measured processor usage is indicative of a potential performance bottleneck (for example it exceeds a threshold percentage of the total capacity), audio components are selected based on their assigned priority to be adjusted to lower quality and therefore reduce the stress and the processing unit.

The priority of the audio components may also be determined in a number of different ways and may be assessed dynamically during gameplay. In a first example, the priority of the audio components may be determined based on a distance of a virtual source of the audio component from the player character within the game environment. The "virtual source" is where the sound originates in the virtual world of the game and so is related to diegetic sounds. For example, sound effects associated with a non-player character nearer to player character may be assigned a higher priority than sound effects associated with a second nonplayer character within the game environment. When the measured usage of the processing unit indicates the processing requirement mut be reduced, the sound effects associated with the second non-player character may be selected for adjustment in audio output quality.

In another example the priority of the audio components may be determined at least in part based on the number of similar audio components to the output within a threshold time period. For example, if there are a large number of bullets being fired during a battle sequence, where each gunshot is associated with a particular sound effect and the sound of each impact of a bullet on a surface is associated with a second sound effect, there will be a large number of similar sound effects to be processed and output in a short space of time. In such scenarios the processing of each individual sound effect to a high quality is likely not to be necessary to preserve the overall audio and user's enjoyment of the game. Therefore, in these situations, the method may comprise determining when there are a large number of similar corresponding audio components to be output in a predefined time period and select all or a portion of the similar audio components to be output at a lower quality, for example by processing at a lower sample rate or bit depth.

In a further example of the invention, the method may include the use of additional hardware to decide on a priority of the audio components and select which should be processed at a differing audio output quality. As shown in Figure 2B, which will be described in more detail below, the video gaming system 1 may comprise additional input hardware, such as a headset 52 configured for user eye-tracking. The headset 52 may implement known methods to track the gaze of a user to identify which areas of the screen the user is looking at. With this input data, the system 1 may implement an "audio lensing" function, in which the quality of the output audio is varied based on the detected location of the user's gaze. Audio components may be assigned a priority (at least in part) based on where the virtual source of the corresponding audio component is on the display of the screen relative to the location of the user's gaze. For example, if the user's gaze is detected to be at the location corresponding to a non-player character in a particular location of the screen, sound effects associated with that non-player character are assigned a higher priority than sound effects associated with non-player characters further from the location of the user's gaze. In this way, when it is determined that the measured usage of the processing unit is indicative of a potential performance bottleneck, for example when the utilisation of the processor exceeds a predetermined threshold, the quality of sound effects deriving from locations closer to the user's gaze is preserved, while the quality of audio components associated with sound effects that are distanced from the location the user's gaze are reduced to reduce the load on CPU. This "audio lensing" effect is similar to the real human experience of sound, where it is possible to focus in on sounds to listen carefully and partially ignore other sounds.

In further examples there may be a more complex method for determining priority based on one or more of the measures described above. In particular each audio component may have a priority score based on a formula incorporating one or more of the above distance of the location of the audio component from the player character, the type of audio component, a measure of the number of synchronous similar audio components being output and / or a determination of the distance from the location of the user's gaze.

The methods of the present invention may run continuously such that the load on the processing unit is continuously monitored and the audio output stream is adjusted dynamically corresponding to the determine behaviour of the measured load of the processing unit. The examples above were described mainly for the case of lowering the audio quality when the load and the processing exceeds a threshold or suggests that capacity may be reached resulting in performance bottlenecks. However, all of the above implementations may also be provided to maximise the quality of the output audio components when the processing unit has capacity. For example, audio components may be output at a default quality, lower than the maximum possible output quality. In these examples, the audio components may be output at this lower quality output during the normal course of gameplay then, when it is detected that there is sufficient excess capacity in the processing unit, the audio adjustment module may switch to provide improved output audio quality. The audio components may be selected according to an assigned priority, as described above, by selecting higher priority audio components to be output to the higher audio output quality when there is sufficient capacity at the processing unit.

In a further extension to the invention the method may include calculating the reduction on the processing activity of the processing unit required to avoid performance bottlenecks. For example the method may involve determining that a 5% reduction in the utilisation of the processing unit is required to provide maximum performance and in response the method may involve selecting audio components for adjustments to provide this reduction in processor utilisation.

Figure 2B schematically illustrates a further exemplary video gaming system on which the above-described methods may be implemented, where one or more of these features may be used within the general system described above. Figure 2B illustrates a schematic diagram illustrating the Sony PlayStation 5 (PS5) architecture. The system one comprises a processing unit 10, which may be a single or multi core processor, for example comprising eight cores as in the PS5. The system 1 of Figure 2B also comprises a graphical processing unit (GPU) 12. The GPU 12 can be physically separate to the CPU 11, or integrated with the CPU as a system-on-a-chip brackets (SoC) as in the PS5. The system one may have separate RAM 21 for each of the CPU and GPU or shared RAM as in the PS5. The RAM 21 can be physically separate or integrated as part of a SoC as in the PS5. Further memory may be provided by a disc 23, either as an external integrated hard drive, or as an external solid-state drive or internal solid state drive 22 as in the case of the PS5.

User input is typically provided using a handheld controller 51, such as the DualSense^{®} controller in the case of the PS5. The system 1 may transmit or receive data by one or more data ports 41, such as a USB port, ethernet port, WI-FI port or Bluetooth port. As above the audio-visual output from the system 1 is typically provided through one or more AV ports 30. The methods described above may be implemented in the same way on the system of Figure 2B. In this case, the method may comprise measuring the usage of the processing unit 10 as a whole or measuring the usage of one or both GPU 12 and CPU 11 individually. The audio data files may be stored locally in one of the memory components 21, 22, 23 or retrieved from an external storage through the data port 41. As described above, when it is detected that one or both of the CPU 11 and GPU 12 are approaching their capacity indicating and performance bottleneck, one or more audio components are selected to be output at a reduced output quality through the AV port 30. As described above this may be facilitated by selecting a lower quality file associated with the audio components. In particular an audio file with a lower bit depth and / or sample rate may be selected and processed to output the corresponding audio components. The system may include additional hardware such as a headset 52 with eye tracking wherein the data from the eye-tracking module of the headset 52 may be used as an additional input to determine the priority of audio components and adjust the output quality of those of video components correspondingly.

## Claims

1. A method for adjusting the audio output of a video gaming system during gameplay, the method comprising:
measuring the usage of a processing unit of the video gaming system during gameplay (101), wherein the video gaming system is configured to output an audio stream comprising a plurality of audio components, the processing unit configured to process an audio data file to output each audio component;
receiving data from an eye-tracking module indicative of the location of the gaze of a user, where a priority of an audio component is determined based, at least in part, on the correspondence between the location of user's gaze and the virtual source of the audio component within the game environment;
selecting the audio component to be adjusted based on the determined priority of the audio component relative to other audio components in the audio stream;
calculating a probability of the usage of the processing unit exceeding a predetermined threshold;
reducing the output quality of the audio component of the audio stream (203) pre-emptively to avoid the usage of the processing unit exceeding the predetermined threshold; and
wherein the probability is calculated based on input including one or more of: the current stage of gameplay, a sequence of gameplay events in a preceding time period, user input received with a user input device within a preceding time period.

2. The method of claim 1 wherein adjusting the output quality of an audio component comprises varying one or more of:
the bit depth of the corresponding audio data file;
the sample rate of the corresponding audio data file;
a frequency range of the corresponding audio data file.

3. The method of claim 1 or claim 2 comprising
determining when the measured usage of the processing unit exceeds a threshold of the total capacity of the processing unit;
reducing the output quality of one or more audio components of the audio stream.

4. The method of any preceding claim, wherein the video gaming system comprises a memory storing a plurality of audio data files for one or more audio components, each audio data file encoding the same audio component at a different file size, where adjusting the output quality of an audio component comprises:
selecting an audio data file from the plurality of audio data files to vary the amount of audio data required to be processed to output the corresponding audio component.

5. The method of any preceding claim, wherein the video gaming system comprises a memory storing a high-quality audio data file for one or more audio components, the high-quality audio data file encoding sufficient audio data to output the audio component at a first output quality, where adjusting the output quality of the one or more audio component comprises:
processing the high-quality audio data file to output the corresponding audio component at a second output quality that is lower than the first output quality.

6. The method of claim 5, wherein processing the high-quality audio data file comprises:
converting the high-quality audio data file to a reduced-quality audio data file and processing the reduced-quality audio date file, where reduced-quality audio data file has a smaller file size that the high-quality audio data file.

7. The method of claim 5, wherein processing the high-quality audio data file comprises:
processing only part of the audio data of the high-quality audio data file to output the corresponding audio component at the second output quality.

8. The method of any preceding claim further comprising:
determining when the measured usage of the processing unit exceeds a threshold of the total capacity of the processing unit;
determining a reduction in the usage of the processing unit required to return the usage below the threshold of the total capacity;
selecting one or more audio components to be adjusted based on the processing requirement of the corresponding audio data file in order to return the usage of the processing unit below the threshold of the total capacity.

9. The method of any preceding claim wherein the priority of the selected audio component is determined based on the distance of a virtual source of the audio component from the player character within the game environment, where audio components having a virtual source closer to player character are determined as having a higher priority.

10. The method of any preceding claim wherein the priority of the audio component is determined based, at least in part, on the number of similar corresponding audio components to be output within a threshold time period around the selected audio component, wherein an audio component is determined as having a lower priority where there are a greater number of similar audio components to be output within the threshold time period.

11. The method of any preceding claim comprising monitoring the location of the user's gaze based on the data received from an eye-tracking module and adjusting the quality of one or more audio components such that audio components corresponding to a virtual source nearer the location of the user's gaze are output at higher quality than audio components corresponding to a virtual source further from the location of the user's gaze.

12. A video gaming system comprising:
an audio output configured to output an audio stream during gameplay, the audio stream comprising a plurality of audio components;
a processing unit configured to process an audio data file to output each audio component of the audio stream;
an audio adjustment module configured to:
measure the usage of the processing unit during gameplay; and
receive data from an eye-tracking module indicative of the location of the gaze of a user, where a priority of an audio component is determined based, at least in part, on the correspondence between the location of user's gaze and the virtual source of the audio component within the game environment;
select the audio component to be adjusted based on the determined priority of the audio component relative to other audio components in the audio stream;
calculate a probability of the usage of the processing unit exceeding a predetermined threshold;
reduce the output quality of the audio component of the audio stream pre-emptively to avoid the usage of the processing unit exceeding the predetermined threshold; and
wherein the probability is calculated based on input including one or more of: the current stage of gameplay, a sequence of gameplay events in a preceding time period, user input received with a user input device within a preceding time period.

## Patentansprüche

1. Verfahren zum Einstellen der Audioausgabe eines Videospielsystems während des Spielens, wobei das Verfahren umfasst:
Messen der Auslastung einer Verarbeitungseinheit des Videospielsystems während des Spielens (101),
wobei das Videospielsystem konfiguriert ist, um einen Audiostream auszugeben, der eine Vielzahl von Audiokomponenten umfasst, wobei die Verarbeitungseinheit konfiguriert ist, um eine Audiodatendatei zu verarbeiten, um jede Audiokomponente auszugeben;
Empfangen von Daten von einem Augenverfolgungsmodul, die den Blickpunkt eines Benutzers angeben, wobei eine Priorität einer Audiokomponente mindestens teilweise basierend auf der Übereinstimmung zwischen dem Blickpunkt des Benutzers und der virtuellen Quelle der Audiokomponente innerhalb der Spielumgebung ermittelt wird;
Auswählen der einzustellenden Audiokomponente basierend auf der ermittelten Priorität der Audiokomponente im Verhältnis zu anderen Audiokomponenten in dem Audiostream;
Berechnen einer Wahrscheinlichkeit, dass die Auslastung der Verarbeitungseinheit einen vorgegebenen Schwellenwert überschreitet;
vorbeugendes Reduzieren der Ausgabequalität der Audiokomponente des Audiostreams (203), um zu vermeiden, dass die Auslastung der Verarbeitungseinheit den vorgegebenen Schwellenwert überschreitet; und
wobei die Wahrscheinlichkeit basierend auf Eingaben berechnet wird, die eines oder mehrere einschließen aus: der aktuellen Spielphase, einer Abfolge von Spielereignissen in einem vorhergehenden Zeitraum, Benutzereingaben, die mit einer Benutzereingabevorrichtung in einem vorhergehenden Zeitraum empfangen wurden.

2. Verfahren nach Anspruch 1, wobei das Einstellen der Ausgabequalität einer Audiokomponente das Variieren von einem oder mehreren umfasst aus:
der Bittiefe der entsprechenden Audiodatendatei;
der Abtastrate der entsprechenden Audiodatendatei;
einem Frequenzbereich der entsprechenden Audiodatendatei.

3. Verfahren nach Anspruch 1 oder 2, umfassend
Ermitteln, wann die gemessene Auslastung der Verarbeitungseinheit einen Schwellenwert der Gesamtkapazität der Verarbeitungseinheit überschreitet;
Reduzieren der Ausgabequalität einer oder mehrerer Audiokomponenten des Audiostreams.

4. Verfahren nach einem der vorstehenden Ansprüche, wobei das Videospielsystem einen Speicher umfasst, der eine Vielzahl von Audiodatendateien für eine oder mehrere Audiokomponenten speichert, wobei jede Audiodatendatei dieselbe Audiokomponente in einer unterschiedlichen Dateigröße codiert, wobei das Einstellen der Ausgabequalität einer Audiokomponente umfasst:
Auswählen einer Audiodatendatei aus einer Vielzahl von Audiodatendateien, um die Menge von zu verarbeitenden Audiodaten zu variieren, um die entsprechende Audiokomponente auszugeben.

5. Verfahren nach einem der vorstehenden Ansprüche, wobei das Videospielsystem einen Speicher umfasst, der eine hochwertige Audiodatendatei für eine oder mehrere Audiokomponenten speichert, wobei die hochwertige Audiodatendatei genügend Audiodaten codiert, um die Audiokomponente in einer ersten Ausgabequalität auszugeben, wobei das Einstellen der Ausgabequalität der einen oder der mehreren Audiokomponenten umfasst:
Verarbeiten der hochwertigen Audiodatendatei, um die entsprechende Audiokomponente in einer zweiten Ausgabequalität auszugeben, die niedriger als die erste Ausgabequalität ist.

6. Verfahren nach Anspruch 5, wobei das Verarbeiten der hochwertigen Audiodatendatei umfasst:
Konvertieren der hochwertigen Audiodatendatei in eine Audiodatendatei reduzierter Qualität und Verarbeiten der Audiodatendatei reduzierter Qualität, wobei die Audiodatendatei reduzierter Qualität eine kleinere Dateigröße als die hochwertige Audiodatendatei aufweist.

7. Verfahren nach Anspruch 5, wobei das Verarbeiten der hochwertigen Audiodatendatei umfasst:
Verarbeiten nur eines Teils der Audiodaten der hochwertigen Audiodatendatei, um die entsprechende Audiokomponente in der zweiten Ausgabequalität auszugeben.

8. Verfahren nach einem der vorstehenden Ansprüche, ferner umfassend:
Ermitteln, wann die gemessene Auslastung der Verarbeitungseinheit einen Schwellenwert der Gesamtkapazität der Verarbeitungseinheit überschreitet;
Ermitteln einer Reduzierung bei der Auslastung der Verarbeitungseinheit, die erforderlich ist, um die Auslastung wieder unter den Schwellenwert der Gesamtkapazität zu bringen;
Auswählen einer oder mehrerer Audiokomponenten, die basierend auf den Verarbeitungsanforderungen der entsprechenden Audiodatendatei einzustellen sind, um die Auslastung der Verarbeitungseinheit wieder unter den Schwellenwert der Gesamtkapazität zu bringen.

9. Verfahren nach einem der vorstehenden Ansprüche, wobei die Priorität der ausgewählten Audiokomponente basierend auf der Entfernung einer virtuellen Quelle der Audiokomponente von der Spielerfigur innerhalb der Spielumgebung ermittelt wird, wobei Audiokomponenten, die eine virtuelle Quelle aufweisen, die näher an der Spielerfigur liegt, als eine höhere Priorität aufweisend ermittelt werden.

10. Verfahren nach einem der vorstehenden Ansprüche, wobei die Priorität der Audiokomponente mindestens teilweise basierend auf der Anzahl ähnlicher entsprechender Audiokomponenten ermittelt wird, die innerhalb eines Schwellenwertzeitraums um die ausgewählte Audiokomponente herum ausgegeben werden sollen, wobei eine Audiokomponente als eine niedrigere Priorität aufweisend ermittelt wird, wenn eine größere Anzahl ähnlicher Audiokomponenten vorliegt, die innerhalb des Schwellenwertzeitraums ausgegeben werden sollen.

11. Verfahren nach einem der vorstehenden Ansprüche, umfassend das Überwachen des Blickpunkts des Benutzers basierend auf den von einem Augenverfolgungsmodul empfangenen Daten und das Einstellen der Qualität einer oder mehrerer Audiokomponenten, sodass Audiokomponenten, die einer virtuellen Quelle entsprechen, die näher am Blickpunkt des Benutzers liegt, in höherer Qualität ausgegeben werden als Audiokomponenten, die einer virtuellen Quelle entsprechen, die weiter vom Blickpunkt des Benutzers entfernt ist.

12. Videospielsystem, umfassend:
einen Audioausgang, der konfiguriert ist, um während des Spielens einen Audiostream auszugeben, wobei der Audiostream eine Vielzahl von Audiokomponenten umfasst;
eine Verarbeitungseinheit, die konfiguriert ist, um eine Audiodatendatei zu verarbeiten, um jede Audiokomponente des Audiostreams auszugeben;
ein Audioeinstellungsmodul, das konfiguriert ist zum:
Messen der Auslastung der Prozessoreinheit während des Spiels und
Empfangen von Daten von einem Augenverfolgungsmodul, die den Blickpunkt eines Benutzers angeben, wobei eine Priorität einer Audiokomponente mindestens teilweise basierend auf der Übereinstimmung zwischen dem Blickpunkt des Benutzers und der virtuellen Quelle der Audiokomponente innerhalb der Spielumgebung ermittelt wird;
Auswählen der einzustellenden Audiokomponente basierend auf der ermittelten Priorität der Audiokomponente im Verhältnis zu anderen Audiokomponenten in dem Audiostream;
Berechnen einer Wahrscheinlichkeit, dass die Auslastung der Verarbeitungseinheit einen vorgegebenen Schwellenwert überschreitet;
vorbeugenden Reduzieren der Ausgabequalität der Audiokomponente des Audiostreams, um zu vermeiden, dass die Auslastung der Verarbeitungseinheit den vorgegebenen Schwellenwert überschreitet; und
wobei die Wahrscheinlichkeit basierend auf Eingaben berechnet wird, die eines oder mehrere einschließen aus: der aktuellen Spielphase, einer Abfolge von Spielereignissen in einem vorhergehenden Zeitraum, Benutzereingaben, die mit einer Benutzereingabevorrichtung in einem vorhergehenden Zeitraum empfangen wurden.

## Revendications

1. Procédé de réglage de la sortie audio d'un système de jeu vidéo pendant le jeu, le procédé comprenant :
la mesure de l'utilisation d'une unité de traitement du système de jeu vidéo pendant le jeu (101),
dans lequel le système de jeu vidéo est configuré pour délivrer en sortie un flux audio comprenant une pluralité de composantes audio, l'unité de traitement étant configurée pour traiter un fichier de données audio afin de délivrer en sortie chaque composante audio ;
la réception de données à partir d'un module d'oculométrie indicatives de l'emplacement du regard d'un utilisateur, dans lequel une priorité d'une composante audio est déterminée sur la base, au moins en partie, de la correspondance entre l'emplacement du regard de l'utilisateur et la source virtuelle de la composante audio à l'intérieur de l'environnement de jeu ;
la sélection de la composante audio à régler sur la base de la priorité déterminée de la composante audio par rapport à d'autres composantes audio dans le flux audio ;
le calcul d'une probabilité que l'utilisation de l'unité de traitement dépasse un seuil prédéterminé ;
la réduction de la qualité de sortie de la composante audio du flux audio (203) de manière préventive afin d'éviter que l'utilisation de l'unité de traitement ne dépasse le seuil prédéterminé ; et
dans lequel la probabilité est calculée sur la base d'une entrée comportant l'une ou plusieurs parmi : l'étape actuelle de jeu, une séquence d'événements de jeu au cours d'une période de temps précédente, une entrée utilisateur reçue à l'aide d'un dispositif d'entrée utilisateur à l'intérieur d'une période de temps précédente.

2. Procédé selon la revendication 1, dans lequel le réglage de la qualité de sortie d'une composante audio comprend une variation de l'une ou plusieurs parmi :
la profondeur de bits du fichier de données audio correspondant ;
la fréquence d'échantillonnage du fichier de données audio correspondant ;
une plage de fréquences du fichier de données audio correspondant.

3. Procédé selon la revendication 1 ou la revendication 2 comprenant
la détermination du moment où l'utilisation mesurée de l'unité de traitement dépasse un seuil de la capacité totale de l'unité de traitement ;
la réduction de la qualité de sortie d'une ou plusieurs composantes audio du flux audio.

4. Procédé selon l'une quelconque revendication précédente, dans lequel le système de jeu vidéo comprend une mémoire stockant une pluralité de fichiers de données audio pour une ou plusieurs composantes audio, chaque fichier de données audio codant la même composante audio à une taille de fichier différente, dans lequel le réglage de la qualité de sortie d'une composante audio comprend :
la sélection d'un fichier de données audio parmi la pluralité de fichiers de données audio pour faire varier la quantité de données audio devant être traitées afin de délivrer en sortie la composante audio correspondante.

5. Procédé selon l'une quelconque revendication précédente, dans lequel le système de jeu vidéo comprend une mémoire stockant un fichier de données audio de haute qualité pour une ou plusieurs composantes audio, le fichier de données audio de haute qualité codant suffisamment de données audio pour délivrer en sortie la composante audio avec une première qualité de sortie, dans lequel le réglage de la qualité de sortie de la ou des composantes audio comprend :
le traitement du fichier de données audio de haute qualité pour délivrer en sortie la composante audio correspondante avec une seconde qualité de sortie qui est inférieure à la première qualité de sortie.

6. Procédé selon la revendication 5, dans lequel le traitement du fichier de données audio de haute qualité comprend :
la conversion d'un fichier de données audio de haute qualité en un fichier de données audio de qualité réduite et le traitement du fichier de données audio de qualité réduite, dans lequel le fichier de données audio de qualité réduite a une taille de fichier inférieure à celle du fichier de données audio de haute qualité.

7. Procédé selon la revendication 5, dans lequel le traitement du fichier de données audio de haute qualité comprend :
le traitement d'une seule partie des données audio du fichier de données audio de haute qualité pour délivrer en sortie la composante audio correspondante à la seconde qualité de sortie.

8. Procédé selon l'une quelconque revendication précédente comprenant en outre :
la détermination du moment où l'utilisation mesurée de l'unité de traitement dépasse un seuil de la capacité totale de l'unité de traitement ;
la détermination d'une réduction de l'utilisation de l'unité de traitement nécessaire pour ramener l'utilisation en dessous du seuil de la capacité totale ;
la sélection d'une ou plusieurs composantes audio à régler sur la base des exigences de traitement du fichier de données audio correspondant afin de ramener l'utilisation de l'unité de traitement en dessous du seuil de la capacité totale.

9. Procédé selon l'une quelconque revendication précédente, dans lequel la priorité de la composante audio sélectionnée est déterminée sur la base de la distance entre la source virtuelle de la composante audio et le personnage de joueur à l'intérieur de l'environnement de jeu, dans lequel des composantes audio ayant une source virtuelle plus proche du personnage de joueur sont déterminées comme ayant une priorité plus élevée.

10. Procédé selon l'une quelconque revendication précédente, dans lequel la priorité de la composante audio est déterminée sur la base, au moins en partie, du nombre de composantes audio correspondantes similaires à délivrer en sortie à l'intérieur d'une période de temps seuil autour de la composante audio sélectionnée, dans lequel une composante audio est déterminée comme ayant une priorité inférieure lorsqu'il y a un plus grand nombre de composantes audio similaires à délivrer en sortie à l'intérieur de la période de temps seuil.

11. Procédé selon l'une quelconque revendication précédente comprenant la surveillance de l'emplacement du regard de l'utilisateur sur la base des données reçues à partir d'un module d'oculométrie et le réglage de la qualité d'une ou plusieurs composantes audio de sorte que des composantes audio correspondant à une source virtuelle plus proche de l'emplacement du regard de l'utilisateur soient délivrées en sortie avec une qualité supérieure à celle de composantes audio correspondant à une source virtuelle plus éloignée de l'emplacement du regard de l'utilisateur.

12. Système de jeu vidéo comprenant :
une sortie audio configurée pour délivrer en sortie un flux audio pendant le jeu, le flux audio comprenant une pluralité de composantes audio ;
une unité de traitement configurée pour traiter un fichier de données audio afin de délivrer en sortie chaque composante audio du flux audio ;
un module de réglage audio configuré pour :
mesurer l'utilisation de l'unité de traitement pendant le jeu ; et
recevoir des données à partir d'un module d'oculométrie indicatives de l'emplacement du regard d'un utilisateur, dans lequel une priorité d'une composante audio est déterminée sur la base, au moins en partie, de la correspondance entre l'emplacement du regard de l'utilisateur et la source virtuelle de la composante audio à l'intérieur de l'environnement de jeu ;
sélectionner la composante audio à régler sur la base de la priorité déterminée de la composante audio par rapport à d'autres composantes audio dans le flux audio ;
calculer une probabilité que l'utilisation de l'unité de traitement dépasse un seuil prédéterminé ;
réduire la qualité de sortie de la composante audio du flux audio de manière préventive afin d'éviter que l'utilisation de l'unité de traitement ne dépasse le seuil prédéterminé ; et
dans lequel la probabilité est calculée sur la base d'une entrée comportant une ou plusieurs parmi : l'étape actuelle de jeu, une séquence d'événements de jeu au cours d'une période de temps précédente, une entrée utilisateur reçue à l'aide d'un dispositif d'entrée utilisateur à l'intérieur d'une période de temps précédente.
